# EUROPEAN PATENT APPLICATION

(11) **EP 2 034 701 A1**
(43) Date of publication of application: **11.03.2009**
(21) Application number: 08163582.3
(22) Date of filing: 03.09.2008
(51) Int. Cl.: H04M 1/02

(54) **Folding Mobile Terminal Device**

(30) Priority: 04.09.2007 JP 2007228533
(71) Applicant: Panasonic Corporation, Kadoma-shi Osaka 571-8501 (JP)
(72) Inventor: Ueta, Yoshiaki, Osaka Osaka 540-6207 (JP)
(74) Representative: Grünecker, Kinkeldey, Stockmair & Schwanhäusser Anwaltssozietät

(57) **Abstract**

A folding mobile terminal device, having a first housing and a second housing connected to each other via a hinge portion, includes: a first rotating shaft for opening and closing the hinge portion provided on the first housing in a longitudinal direction together with the second housing; a second rotating shaft, provided on the hinge portion perpendicularly to the first rotating shaft, for opening and closing the second housing in a lateral direction; a first magnet provided in vicinity of a place on the second housing, at which the hinge portion is connected thereto; a second magnet provided in the hinge portion; a first magnetism detection unit provided in the first housing at a position facing the first magnet in a closing state of the second housing; and a second magnetism detection unit provided in the second housing at a position facing the second magnet in the closing state.

## Description

### BACKGROUND OF THE INVENTION

### Technical Field

The present invention relates to a folding mobile terminal device configured to have two rotating shafts and to be opened and closed in a longitudinal direction and a lateral direction and, more particularly, to a folding mobile phone configured to be opened and closed in a longitudinal direction and a lateral direction.

### Background Art

In a general method of use of a folding mobile phone adapted to accommodate first and second housings by folding the two housings, a user holds the first housing provided with an operating portion, such as a numeric keypad, and watches a display provided in the second housing. Accordingly, the display is often used by being unfolded in a longitudinal direction.

However, recently, mobile phones for receiving and displaying television broadcasts have been put to practical use and begin to be widely used. When a user watches a landscape-oriented television broadcast image, it is easier to watch the landscape-oriented image by being unfolded in a lateral direction, rotating the display at 90 degrees. Thus, a structure for changing the direction of the display into a lateral direction from a longitudinal direction by mechanically rotating the second housing provided with the display has been proposed (see, e.g., Patent Document 1).

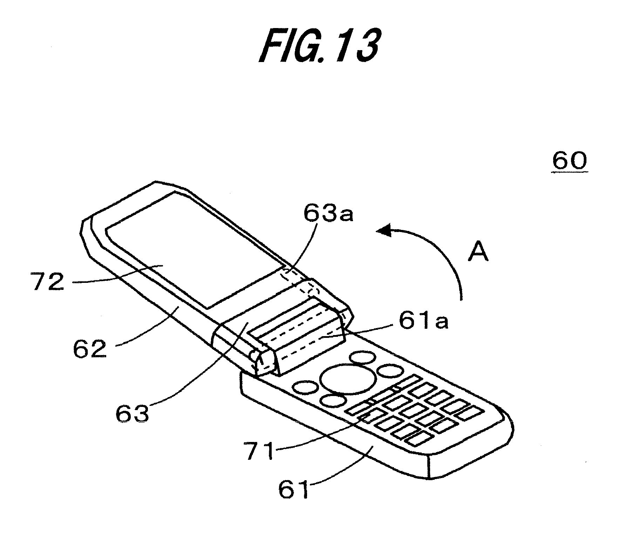

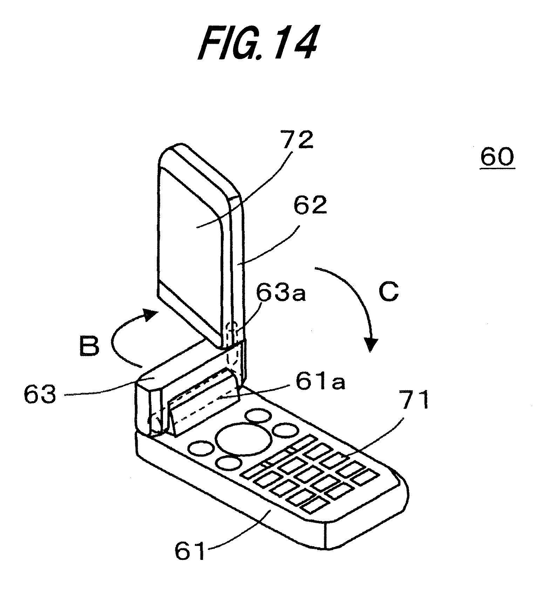

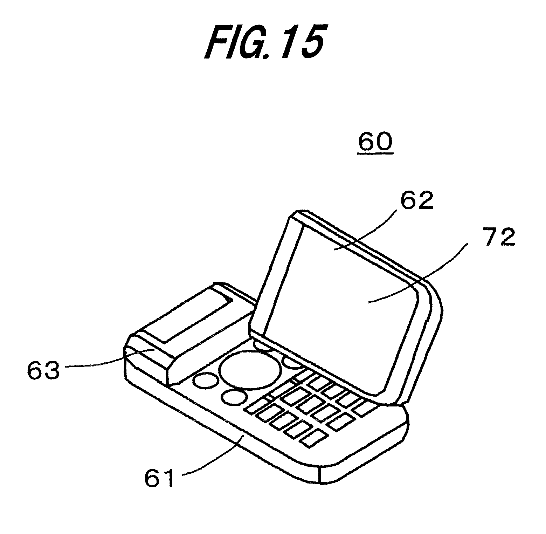

FIGs. 13 to 15 illustrate one example of folding mobile phones that have hitherto been proposed. A mobile phone 60 illustrated in FIG. 13 includes three housings, i.e., a first housing 61 having an operating part 71, a second housing 62 having a display 72, and a hinge portion 63. Further, the hinge portion 63 is supported on a first rotating shaft 61a provided in the first housing 61 rotatably in the direction of arrow A. The second housing 62 having the display 72 is supported on a second rotating shaft 63a provided on the top of the hinge portion 63 rotatably around the second rotating shaft 63a. Thus, the mobile phone 60 is such that the second housing 62 can rotate around the second rotating shaft 63a of the hinge portion 63 in the direction of arrow B in a state in which the hinge portion 63 is erected perpendicularly to the first housing 61, as illustrated in FIG. 14. When the second housing 62 is tilted in the direction of arrow C together with the hinge portion 63 in this state, the mobile phone 60 can be used in a manner in which the display 72 of the second housing 62 is opened in a lateral direction, as illustrated in FIG. 15.

Thus, the related mobile phone 60 performs three rotating operations, i.e., a rotating operation in the direction of arrow A, a rotating operation in the direction of arrow B, and a rotating operation in the direction of arrow C, in order to change the state of the display 72 from a state in which the display 72 is opened in a longitudinal direction, to a state in which the display 72 is opened in a lateral direction, as illustrated in FIGs. 13 to 15. Additionally, a mechanical movement of the housing, which is caused by the rotating operation, is detected. Then, a direction of displaying an image to be displayed is changed in response to the movement of the housing.

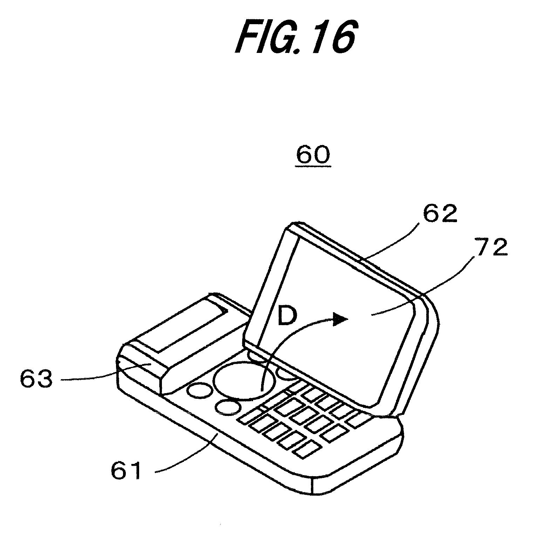

Incidentally, in a case where the second housing 62 is opened in the direction of arrow D in a state in which the second housing 62 is arranged on the first housing 61 as illustrated in FIG. 16, as a modification of the related mobile phone 60, conveniently, the display 72 can be put into a state, in which the display 72 is opened in a lateral direction, by a single operation. In this case, when the folded second housing 62 is unfolded, it is necessary to correctly determine the direction of displaying an image in the display by appropriately determining whether the housing is opened in the longitudinal direction or in the lateral direction.

Furthermore, some folding mobile phone is put to practical use, which has a communication-line connection control function of automatically connecting a communication-line thereto when the housing is unfolded at arrival of an incoming call, and of automatically disconnecting the communication-line when the housing is folded after the communication-line is connected thereto. According to this mobile phone, it is convenient that a user can immediately talk over the mobile phone only by unfolding the housing, without pushing a call start button. Moreover, it is convenient that a user can simply end a call only by folding the housing without pushing a call end button.

In a case where the aforementioned mobile phone 60 has the line connection control function of automatically connect or disconnect a communication-line according to the opening/closing of the housing, it is important to correctly determine whether the second housing is unfolded/folded in the longitudinal direction or in the lateral direction. That is, in case that the communication-line connection control function is incorporated into the related mobile phone 60, a user can talk over the mobile phone without problems when a communication-line is connected thereto by detecting that the mobile phone 60 is opened in a longitudinal direction, as illustrated in FIG. 13. However, when a communication-line is connected to the mobile phone in a state in which the mobile phone 60 is opened in a lateral direction, as illustrated in FIG. 16, the positions of a microphone and a speaker do not coincide with those of a user's mouth and ear. Consequently, the user cannot talk over the mobile phone. When the user, in haste, once closes the second housing 62 in a direction opposite to the direction of arrow D illustrated in FIG. 15, and then opens the second housing 62 in a longitudinal direction as illustrated in FIG. 13, a communication-line will be disconnected because the second housing 62 is closed once. Thus, when the second housing 62 is opened again in the longitudinal direction, the user cannot talk over the mobile phone.
[Patent Document 1] JP-A-2006-22899

### SUMMARY OF THE INVENTION

A first object of the invention is to correctly determine a displaying direction of a display of a folding mobile terminal device, such as a mobile phone, a gaming machine, and a personal digital assistant (PDA) having a function of receiving television broadcasts, configured to have two rotating shafts and to be opened and closed in a longitudinal direction and a lateral direction, by appropriately determining, when a folded second housing is opened, whether the second housing is opened in the longitudinal direction or in the lateral direction.

Further, a wireless telephone communication unit is additionally provided in the mobile phone device configured to have two rotating shafts and to be opened and closed in a longitudinal direction and a lateral direction. In addition, the mobile phone device has the function of automatically connecting a communication-line to the mobile phone device when the housing is unfolded at arrival of an incoming call, and of automatically disconnecting the communication-line when the housing is folded after the communication-line is connected thereto. A second object of the invention is to implement a convenient folding mobile phone configured so that a communication-line is connected thereto when the housing is unfolded in a longitudinal direction at arrival of an incoming call, and that no communication-line is connected thereto when the housing is unfolded in a lateral direction at arrival of an incoming call.

According to an aspect of the invention, there is provided a folding mobile terminal device having a first housing and a second housing connected to each other via a hinge portion, including: a first rotating shaft for opening and closing the hinge portion provided on the first housing in a longitudinal direction together with the second housing; a second rotating shaft, provided on the hinge portion perpendicularly to the first rotating shaft, for opening and closing the second housing in a lateral direction; a first magnet provided in vicinity of a place on the second housing, at which the hinge portion is connected thereto; a second magnet provided in the hinge portion; a first magnetism detection unit provided in the first housing at a position facing the first magnet in a state in which the second housing is closed; and a second magnetism detection unit provided in the second housing at a position facing the second magnet in a state in which the second housing is closed, wherein the first magnetism detection unit detects based on a detection of magnetism generated by the first magnet that the second housing is opened or closed in the longitudinal direction; and wherein the second magnetism detection unit detects based on a detection of magnetism generated by the second magnet that the second housing is opened or closed in the lateral direction.

According to another aspect of the invention, the folding mobile terminal device is configured such that the first rotating shaft opens and closes the hinge portion, which is connected to the first housing by a plurality of bearing portions, in the longitudinal direction together with the second housing; that the second rotating shaft is provided in one of the plurality of the bearing portions, which is provided at an end of the hinge portion, perpendicularly to the first rotating shaft; and that the second magnet is provided at a side of the hinge portion, which is opposite to the second rotating shaft.

According to another aspect of the invention, the folding mobile terminal device is configured that the first housing is connected to the second housing via the hinge portion provided along one end side portion substantially parallel to a lateral direction of the first housing; that the second rotating shaft is provided at an end of the hinge portion perpendicularly to the first rotating shaft; and that the second magnet is provided at a side of the hinge portion, which is opposite to the second rotating shaft.

According to another aspect of the invention, the folding mobile terminal device includes an engaging pin provided on the first housing; and an engaging portion provided on the second housing, and is configured such that the second rotating shaft is provided at an end of the hinge portion perpendicularly to the first rotating shaft; that the second magnet is provided at a side of the hinge portion, which is opposite to the second rotating shaft; and that the engaging pin and the engaging portion function as a support portion for supporting rotation of the second housing when the second housing is opened in the lateral direction.

According to another aspect of the invention, the folding mobile terminal device is configured such that a warning operation is performed when it is detected that the second housing is opened simultaneously in both of the longitudinal direction and the lateral direction.

According to another aspect of the invention, the folding mobile terminal device includes a wireless telephone communication unit, and is configured such that when the first magnetism detection unit detects that the second housing is opened in the longitudinal direction at arrival of an incoming call, a communication-line is connected to the wireless telephone communication unit.

According to another aspect of the invention, the folding mobile terminal device is configured such that when the second magnetism detection unit detects that the second housing is opened in the lateral direction at arrival of the incoming call, the communication-line is not connected to the wireless telephone communication unit.

With these configurations, when the hinge portion is opened in the longitudinal direction, only the longitudinal opening/closing detection unit detects opening/closing of the hinge portions. On the other hand, when the second housing is opened in the lateral direction, only the lateral opening/closing detection unit detects opening/closing of the second housing and the hinge portion. Accordingly, the displaying direction of the display can be correctly determined by appropriately determining which of the lateral direction and the longitudinal direction, a direction, in which the second housing is opened, is.

With these configurations, the longitudinal opening/closing unit and the lateral opening/closing unit can be provided in the device so that the positions of theses opening/closing unit are independent of each other.

With these configurations, the device can perform a warning operation by detecting that an excessive load is applied to the second rotating shaft by simultaneously opening the housing and the hinge portion in both the longitudinal direction and the lateral direction.

With these configurations, the folding mobile terminal device can be configured so that a communication-line is connected to the device when the hinge portion is opened in the longitudinal direction at arrival of an incoming call, and that no communication-line is connected thereto when the second housing is opened in the lateral direction at arrival of an incoming call.

According to the invention, in a folding mobile terminal device configured to have two rotating shafts and to be opened and closed in the longitudinal direction and the lateral direction, such as a mobile phone, a gaming machine, and a PDA having the function of receiving television broadcasts, a direction of displaying an image in the display can be correctly determined by appropriately determining, when the folded second housing is unfolded, whether the housing is opened/closed in the longitudinal direction or in the lateral direction.

Also, according to the invention, it can be detected that the mobile phone is used by simultaneously opening the housing in both of the longitudinal direction and the lateral direction to thereby apply an excessive load to a second rotating shaft. Consequently, users can be warned.

Further, according to the invention, a wireless telephone communication unit is additionally provided in the folding mobile terminal device configured to have two rotating shafts and to be opened and closed in the longitudinal direction and the lateral direction. Thus, the folding mobile terminal has the function of automatically connecting, when the housing is unfolded at arrival of an incoming call, a communication-line thereto. Consequently, a convenient folding mobile phone can be implemented, which is configured so that a communication-line is connected thereto when the housing is unfolded in the longitudinal direction at arrival of an incoming call, and that no communication-line is connected thereto when the housing is unfolded in the lateral direction at arrival of an incoming call.

### BRIEF DESCRIPTION OF THE DRAWINGS

The above objects and advantages of the present invention will become more apparent by describing in detail preferred exemplary embodiments thereof with reference to the accompanying drawings, wherein like reference numerals designate like or corresponding parts throughout the several views, and wherein:
FIG. 1 is a perspective view illustrating a state in which a housing of a mobile phone according to Embodiment 1 of the invention is opened in a longitudinal direction;
FIG. 2 is a perspective view illustrating a state in which the housing of the mobile phone according to Embodiment 1 of the invention is opened in a lateral direction;
FIG. 3A is a left side view illustrating a state in which a second housing of the mobile phone according to Embodiment 1 of the invention is slightly opened in the longitudinal direction;
FIG. 3B is a left side view illustrating a state in which the second housing of the mobile phone according to Embodiment 1 of the invention is largely opened in the longitudinal direction;
FIG. 4A is a front view illustrating a state in which the second housing of the mobile phone according to Embodiment 1 of the invention is closed;
FIG. 4B is a front view illustrating a state in which the second housing of the mobile phone according to Embodiment 1 of the invention is slightly opened in a lateral direction;
FIG. 4C is a front view illustrating a state in which the second housing of the mobile phone according to Embodiment 1 of the invention is largely opened in the lateral direction;
FIG. 5 is a perspective view illustrating a state in which a housing of a mobile phone according to a modification of Embodiment 1 of the invention is opened in a lateral direction;
FIG. 6 is a flowchart illustrating an operation of the mobile phone according to Embodiment 2 at arrival of an incoming call;
FIG. 7 is a perspective view illustrating a state in which a housing of a mobile phone according to Embodiment 3 of the invention is opened in a longitudinal direction;
FIG. 8 is a perspective view illustrating a state in which the housing of the mobile phone according to Embodiment 3 of the invention is opened in a lateral direction;
FIG. 9A is a left side view illustrating a state in which a second housing of the mobile phone according to Embodiment 3 of the invention is slightly opened in the longitudinal direction;
FIG. 9B is a left side view illustrating a state in which the second housing of the mobile phone according to Embodiment 3 of the invention is largely opened in the longitudinal direction;
FIG. 10A is a front view illustrating a state in which the second housing of the mobile phone according to Embodiment 3 of the invention is closed;
FIG. 10B is a front view illustrating a state in which the second housing of the mobile phone according to Embodiment 3 of the invention is slightly opened in the lateral direction;
FIG. 10C is a front view illustrating a state in which the second housing of the mobile phone according to Embodiment 3 of the invention is largely opened in the lateral direction;
FIG. 11 is a block diagram illustrating the configuration of a mobile phone according to Embodiment 4;
FIG. 12 is a flowchart illustrating an operation of the mobile phone according to Embodiment 4 at arrival of an incoming call;
FIG. 13 is a perspective view illustrating a state in which a second housing of a related mobile phone is opened in a longitudinal direction;
FIG. 14 is a perspective view illustrating a state in which the second housing of the related mobile phone is rotated after opened in the longitudinal direction;
FIG. 15 is a perspective view illustrating a state in which the second housing of the related mobile phone is opened together with a hinge portion thereof in the longitudinal direction, and in which the hinge portion is closed after the second housing is rotated with respect to the hinge portion; and
FIG. 16 is a perspective view illustrating a state in which the second housing of the related mobile phone is opened in the lateral direction.

### DETAILED DESCRIPTION OF THE PREFERRED EMBODIMENTS

### (Embodiment 1)

According to Embodiment 1 of the invention, the problems are solved by constructing a folding mobile terminal device such that a first housing and a second housing are connected to each other by a hinge portion, that when opened in a longitudinal direction, a longitudinal opening/closing detection unit provided between the first housing and the hinge portion detects opening/closing of the housing and the hinge portion, and that when opened in a lateral direction, a lateral opening/closing detection unit provided between the second housing and the hinge portion detects opening/closing of the housing and the hinge portion.

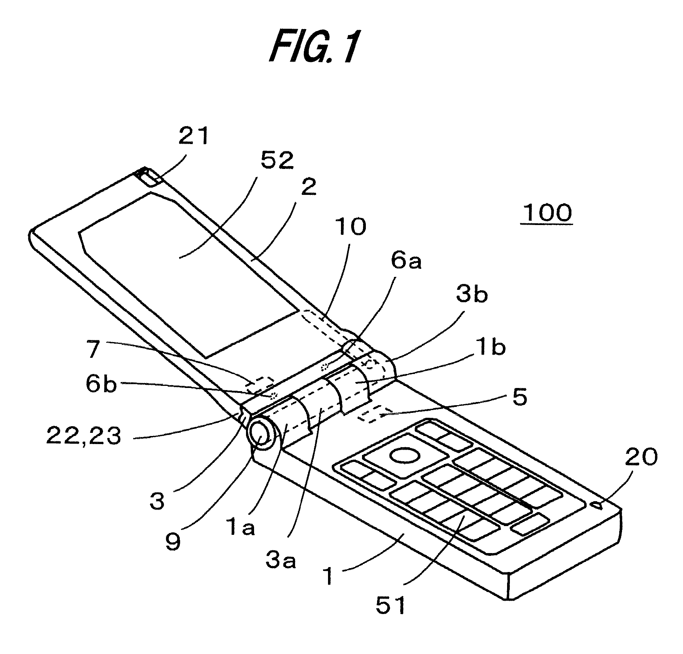

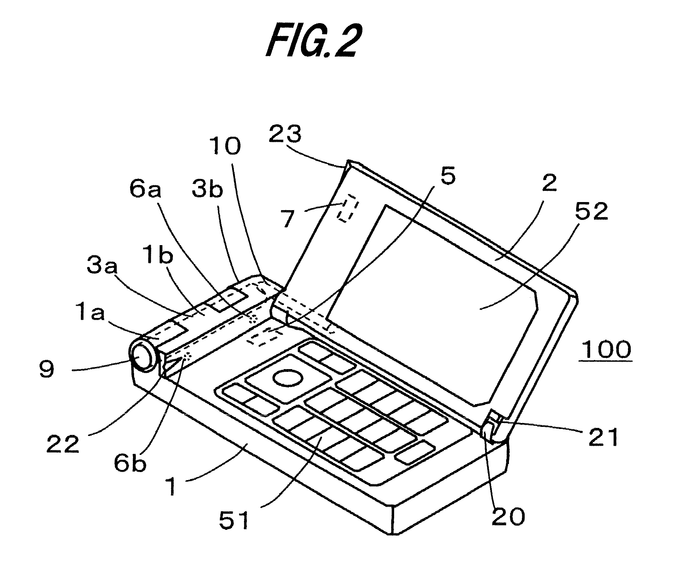

FIG. 1 is a perspective view illustrating a state in which a second housing 2 of a folding mobile phone 100 according to Embodiment 1 of the invention is opened in a longitudinal direction. FIG. 2 is a perspective view illustrating a state in which the second housing 2 of the folding mobile phone 100 according to Embodiment 1 of the invention is opened in a lateral direction.

As shown in FIG. 1, a first housing 1 having an operating portion 51 is such that bearing portions 1 a and 1b support a first rotating shaft 9, and that a hinge portion 3 is attached to the first housing 1 rotatably around the fist rotating shaft 9 by bearing portions 3a and 3b. A second rotating shaft 10 represented by broken lines is provided at one end of the hinge portion 3 perpendicularly to the first rotating shaft 9. A second housing 2 is attached to the second rotating shaft 10 rotatably therearound. A display 52 is provided in the second housing 2.

Magnets 6a and 6b are embedded in the hinge portion 3. In the first housing 1, a Hall effect sensor 5 serving as a magnetic force detection unit is embedded at a position facing a magnet 6a when the hinge portion 3 is folded onto the first housing 1. The Hall effect sensor 5 and the magnet 6a constitute a longitudinal opening/closing detection unit that detects an opened state and a closed state of the hinge portion 3 and the first housing 1.

Further, in the second housing 2, a Hall effect sensor 7 similarly serving as a magnetic force detection unit is embedded at a position facing a magnet 6b in the hinge portion 3 when the hinge portion 3 and the second housing 2 are closed. The Hall effect sensor 7 and the magnet 6b constitute a lateral opening/closing detection unit that detects an opened state and a closed state of the hinge portion 3 and the second housing 2.

When the hinge portion 3 is opened around the first rotating shaft 9 in a longitudinal direction, so that the magnet 6a embedded in the hinge portion 3 is moved away from the Hall effect sensor 5, due to the loss of the magnetic force of the magnet 6a, the Hall effect sensor 5 detects that the hinge portion 3 is opened in a longitudinal direction. Then, when the hinge portion 3 is closed, so that the Hall effect sensor 5 is close to the magnet 6a, and that the Hall effect sensor 5 detects the magnetic force of the magnet 6a, the hinge portion 3 is detected to be closed in the longitudinal direction.

When the second housing 2 is opened around the second rotating shaft 10 in a lateral direction, so that the magnet 6b embedded in the hinge portion 3 is moved away from the Hall effect sensor 7, due to the loss of the magnetic force of the magnet 6b, the Hall effect sensor 7 detects that the second housing 2f is opened in a lateral direction. Then, when the second housing 2 is closed, so that the Hall effect sensor 7 is close to the magnet 6b, and that the Hall effect sensor 7 detects the magnetic force of the magnet 6b, the second housing 2 is detected to be closed in the lateral direction.

When the hinge portion 3 is opened or closed together with the second housing 2 in a longitudinal direction with respect to the first housing 1 as illustrated in FIG. 1, the Hall effect sensor 5 detects that the hinge portion 3 is opened or closed in the longitudinal direction. In this case, the Hall effect sensor 7 detects the magnetic force of the magnet 6b. Thus, the Hall effect sensor 7 detects that the hinge portion 3 and the second housing 2 are closed.

The components illustrated in FIG. 2 is the same as illustrated in FIG. 1 and differs therefrom in a state. That is, the second housing 2 changes a state from a closed state by rotating around the second rotating shaft 10, so that the second housing 2 is opened in a lateral direction with respect to the first housing 1. When the second housing 2 is opened or closed in a lateral direction with respect to the hinge portion 3 as illustrated in FIG. 2, the Hall effect sensor 7 detects opening/closing of the second housing 2 in the lateral direction. In this case, the Hall effect sensor 5 detects the magnetic force of the magnet 6a. Thus, the Hall effect sensor 5 detects that the hinge portion 3 is closed onto the first housing 1.

Thus, when the hinge portion 3 is opened or closed together with the second housing 2 in a longitudinal direction with respect to the first housing 1 in the folding mobile phone 100, the Hall effect sensor 5 detects the opening/closing of the hinge portion 3 in the longitudinal direction. In this case, the Hall effect sensor 7 detects that the hinge portion 3 and the second housing 2 are closed. On the other hand, when the second housing 2 is opened or closed in a lateral direction with respect to the hinge portion 3, the Hall effect sensor 7 detects the opening/closing of the second housing 2 in the lateral direction. In this case, the Hall effect sensor 5 detects that the hinge portion 3 and the first housing 1 are closed.

Incidentally, in consideration of prevention of application of an excessive bending stress to the second rotating shaft 10 when the second housing 2 is opened or closed, in the folding mobile phone 100, an engaging pin 20 is protruded from the first housing 1 by a magnetic force when the hinge portion 3 is closed onto the first housing 1. When the second housing 2 is closed together with the hinge portion 3 onto the first housing 1, the engaging pin 20 is fit into an engaging portion 21 provided near to an end portion of the second housing 2.

Further, an engaging projection 23 is provided near to an end portion of the second housing 2. When the second housing 2 is closed, the engaging projection 23 is fit into an engaging groove 22 provided in the hinge portion 3. In a case where the second housing 2 is opened in a lateral direction in a state in which the engaging pin 20 is fit into an engaging portion 21, the engaging pin 20 and the engaging portion 21 function, together with the second rotating shaft 10, as a support portion for supporting the rotating of the second housing 2.

Furthermore, when the second housing 2 is opened in a longitudinal direction in a state in which the engaging projection 23 is fit into the engaging groove 22, the engaging groove 22 and the engaging projection 23 function, together with the second rotating shaft 10, as a lock mechanism for integrally opening or closing the second housing 2 and the hinge portion 3.

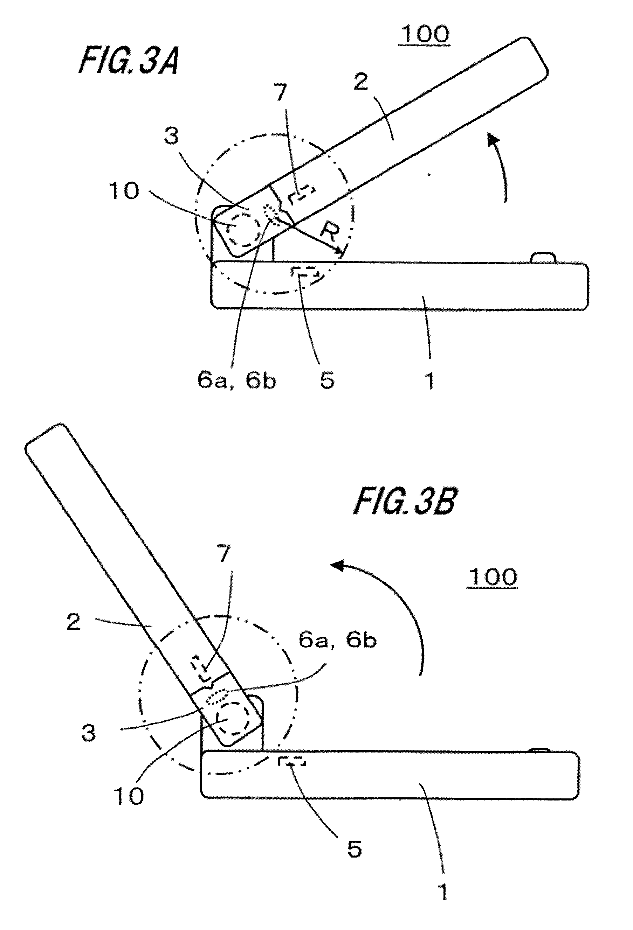

FIGs. 3A and 3B are side views illustrating a state in which the second housing 2 of the folding mobile phone 100 according to Embodiment 1 of the invention. Incidentally, the following description is described by assuming that in FIG. 3A, "R" schematically represents a distance where each of the magnetic forces of the magnets 6a and 6b reaches, and that circles represented by chain double-dashed lines schematically indicate a range where each of the magnetic forces of the magnets 6a and 6b reaches.

FIG. 3A illustrates a state in which the hinge portion 3 is slightly opened in a longitudinal direction together with the second housing 2. In this case, the Hall effect sensors 5 and 7 detect the magnetic forces of the magnets 6a and 6b. Subsequently, when the hinge portion 3 is largely opened in a longitudinal direction and is tilted as illustrated in FIG. 3B, the Hall effect sensor 5 is beyond the reach of the magnetic force of the magnet 6a and detects that the hinge portion 3 is opened in the longitudinal direction. On the other hand, the Hall effect sensor 7 continues to detect the magnetic force of the magnet 6b.

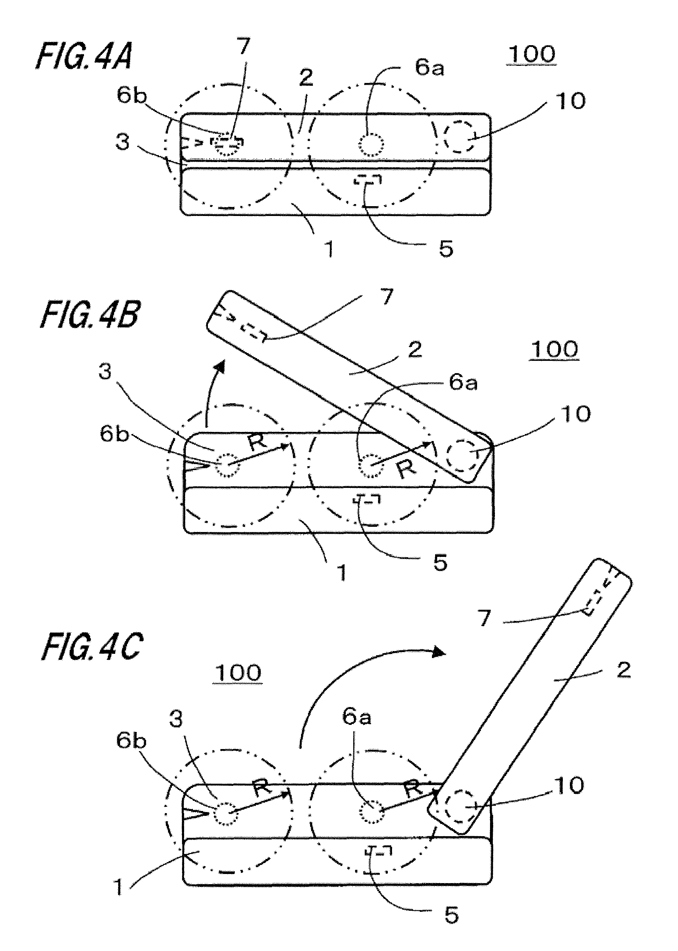

FIGs. 4A, 4B, and 4C are front views each illustrating a state in which the second housing 2 of the folding mobile phone 100 according to Embodiment 1 of the invention is closed or opened in a lateral direction with respect to the hinge portion 3. Incidentally, the following description is described by assuming that in FIGs. 4A, 4B, and 4C, "R" schematically represents a distance where each of the magnetic forces of the magnets 6a and 6b reaches, and that circles represented by chain double-dashed lines schematically indicate a range where each of the magnetic forces of the magnets 6a and 6b reaches, similar to FIGs. 3A and 3B.

FIG. 4A illustrates a state in which the second housing 2 is closed. FIG. 4B illustrates a state in which the second housing 2 is slightly opened in a lateral direction. In this case, due to the fact that the magnetic force of the magnet 6b is lost by opening the second housing 2, the Hall effect sensor 7 detects that the second housing 2 is opened in the lateral direction. On the other hand, the Hall effect sensor 5 continues to detect the magnetic force of the magnet 6a. When the second housing 2 is further tilted, as illustrated in FIG. 4C, the Hall effect sensor 7 is completely beyond the reach of the magnetic force of the magnet 6b. However, the Hall effect sensor 5 continues to detect the magnetic force of the magnet 6a.

Thus, when the hinge portion 3 is opened or closed together with the second housing 2 in a longitudinal direction with respect to the first housing 1 in the folding mobile phone 100, the Hall effect sensor 5 detects that the second housing 2 is opened or closed in a longitudinal direction. In this case, the Hall effect sensor 7 detects that the hinge portion 3 and the second housing 2 are closed. Further, when the second housing 2 is opened or closed in a lateral direction onto the hinge portion 3, the Hall effect sensor 7 detects that the second housing 2 is opened or closed in the lateral direction. In this case, the Hall effect sensor 5 detects that the hinge portion 3 and the first housing 1 are closed.

Accordingly, according to the invention, when the folded second housing is unfolded in the folding mobile terminal device, such as a folding mobile phone, configured to have two rotating shafts and to be opened and closed in a longitudinal direction and a lateral direction, it can appropriately determined whether the second housing is unfolded in the longitudinal direction or in the lateral direction. Consequently, the displaying direction of the display can be determined.

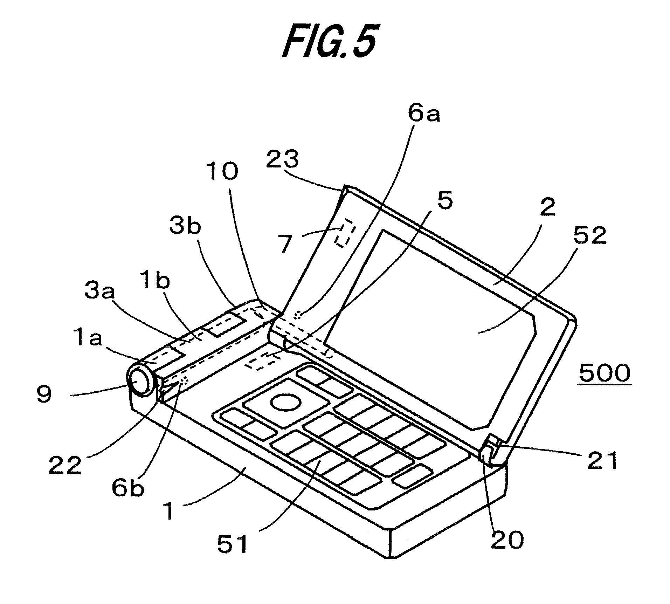

Incidentally, in the foregoing description, an example has been described, in which the magnet 6a constituting the longitudinal opening/closing detection unit is provided in the hinge portion 3. Alternatively, even in a case where the magnet 6a is provided in the second housing 2 so as to correspond to the Hall effect sensor 5, as illustrated in FIG. 5, similar advantages can be obtained.

Also, in the foregoing description, an example of using the combinations of the magnet and the magnetic force detection unit as the longitudinal opening/closing detection unit and the lateral opening/closing detection unit has been described. Alternatively, a combination of a projection and a mechanical switch having contact points brought into contact with each other by being pushed by the projection, or a combination of a shielding member and an optical sensor may be used as one or both of the longitudinal opening/closing detection unit and the lateral opening/closing detection unit.

### (Embodiment 2)

According to the invention, a longitudinal opened/closed state and a lateral opened/closed state can simultaneously be detected. Thus, according to Embodiment 2 of the invention, opening a housing and a hinge portion selectively in one of a longitudinal direction and a lateral direction is assumed to be a normal way of use. In addition, opening the housing and the hinge portion simultaneously in both of a longitudinal direction and a lateral direction is assumed to be an inappropriate way of use. When it is detected that the housing and the hinge portion are opened simultaneously in both the longitudinal direction and the lateral direction, an device according to the present embodiment uses a lamp indication or a buzzer sound to perform a warning operation of cautioning that an inappropriate way of use of the device is performed.

That is, as described in the description of Embodiment 1 with reference to FIGs. 1 and 2, the engaging pin 20 and the engaging portion 21 are engaged with each other and function, together with a second rotating shaft 10, as a support portion for supporting the rotating of a second housing 2. Alternatively, an engaging groove 22 and an engaging projection 23 are engaged with each other and function, together with the second rotating shaft 10, as a lock mechanism for integral opening/closing of the second housing 2 and a hinge portion 3. Such a support portion or a lock mechanism is used to prevent an excessive bending stress from being applied to the second rotating shaft 10 at the opening/closing of the second housing 2 and the hinge portion 3.

For example, when the second housing 2 is opened in a lateral direction with respect to the hinge portion 3 by maintaining a state in which the hinge portion 3 is opened in a longitudinal direction with respect to the first housing 1, a load is applied to the second rotating shaft 10 for supporting the second housing 2. Further, when the hinge portion 3 is opened in the longitudinal direction with respect to the first housing 1 by maintaining a state in which the second housing 2 is opened in the lateral direction with respect to the hinge portion 3, a load is applied to the second rotating shaft 10 for supporting the second housing 2.

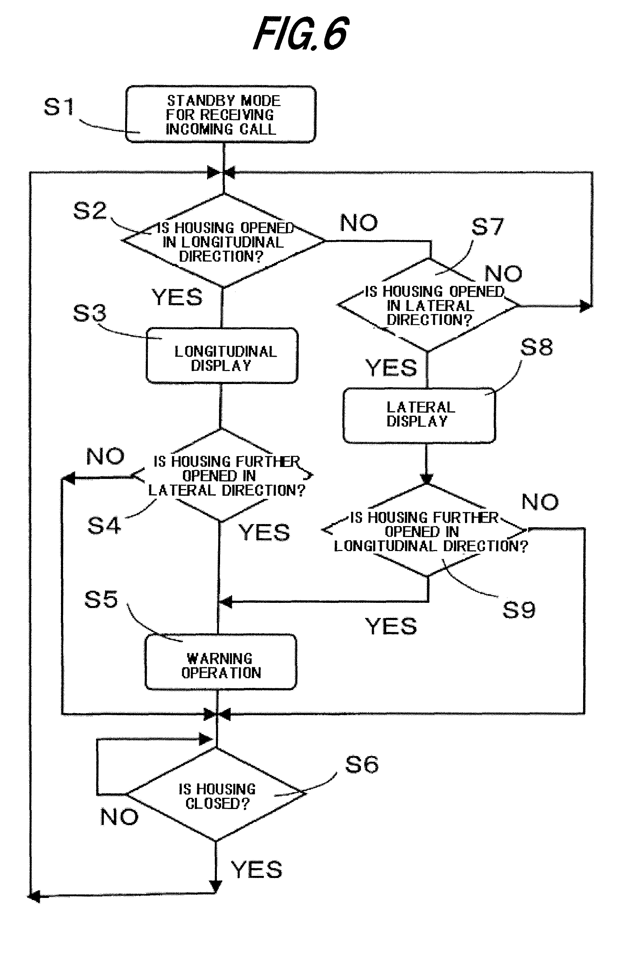

Thus, in a folding mobile phone 200 according to Embodiment 2 of the invention, a control operation is performed as illustrated in a flowchart shown in FIG. 6. This control operation is described with reference to FIG. 6. As illustrated in FIG. 6, in step S1, the folding mobile phone 200 is powered on. If the housing 2 is opened (YES in step S2) when the folding mobile phone 200 is in a standby mode for receiving an incoming call, a longitudinal display is performed in step S3.

If the housing 2 is further opened in the lateral direction in such a state (YES in step S4), a warning operation is performed in step S5 by indicating a warning message in a display 52 or causing a loudspeaker (not shown) to output a buzzer sound. In step S5, the speaker can output a voice message indicating that "close the housing once and subsequently, open the housing again", instead of the buzzer sound. If the housing is closed (YES in step S6), in step S2, the folding mobile phone 200 checks which of an opened state and a closed state the state of the housing 2 is. In step S4, if the housing 2 is not further opened in the lateral direction (NO in step S4) after the housing 2 is opened in the longitudinal direction and the longitudinal display is performed, the longitudinal display is continued until the housing 2 is closed.

If the housing 2 is not opened in the longitudinal direction (NO in step S2) in the standby mode for receiving an incoming call in step S1, and if the housing 2 is opened in the lateral direction (YES in step S7), a lateral display is performed in step S8. If the housing 2 is then opened in the lateral direction in such a state (YES in step S9), a warning operation is performed in step S5. If the housing 2 is not further opened in the longitudinal direction (NO in step S9) after the housing 2 is opened in the lateral direction and the lateral display is performed, the lateral display is continued until the housing 2 is closed.

Thus, if the second housing 2 is opened in the lateral direction with respect to the hinge portion 3 in a state in which the hinge portion 3 is opened in the longitudinal direction with respect to the first housing 1 in the folding mobile phone 200 according to Embodiment 2 of the invention, a warning operation is performed. In addition, if the hinge portion 3 is opened in the longitudinal direction with respect to the first housing 1 in a state in which second housing 2 is opened in the lateral direction with respect to the hinge portion 3, a warning operation is performed. Consequently, a method of using the folding mobile phone 200 so as to apply an excessive bending stress to the second rotating shaft 10 can be stopped by performing a warning operation.

### (Embodiment 3)

Next, Embodiment 3 of the invention is described hereinafter. A mobile phone 300 according to Embodiment 3 of the invention is constructed such that one magnet for detecting an opened state and a closed state is provided in a hinge portion, and that a magnetic force detection unit is provided in each of first and second housings. Further, the magnet of the hinge portion and the magnetic force detection unit of the first housing constitute a longitudinal opening/closing detection unit. Moreover, the magnet of the hinge portion and the magnetic force detection unit of the second housing constitute a lateral opening/closing detection unit. Consequently, the longitudinal opening/closing detection unit detects that the hinge portion is opened in a longitudinal direction with respect to the first housing. The lateral opening/closing detection unit detects that the second housing is opened in a lateral direction with respect to the hinge portion.

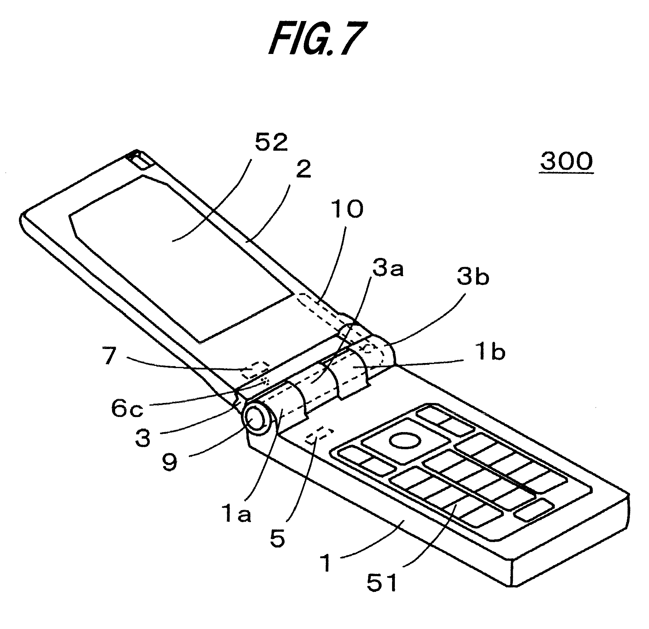

FIG. 7 is a perspective view illustrating a state in which a second housing 2 of a folding mobile phone 300 according to Embodiment 3 of the invention is opened in a longitudinal direction. Basically, the configuration of the folding mobile phone 300 according to Embodiment 3 is similar to that of Embodiment 1 illustrated in FIG. 1. However, the configuration of the folding mobile phone 300 largely differs from that of Embodiment 1 in that one magnet 6c is embedded in a hinge portion 3. In addition, a Hall effect sensor 5 is provided at a place in the first housing 1, which faces the magnet 6c when the hinge portion 3 is closed. Further, a Hall effect sensor 7 is provided at a place in the second housing 2, which faces the magnet 6c when the second housing 2 is closed onto the hinge portion 3.

When the hinge portion 3 is opened together with the second housing 2 in a longitudinal direction with respect to the first housing 1 as illustrated in FIG. 7, the magnet 6c is moved away from the Hall effect sensor 5, and the Hall effect sensor 5 detects that the hinge portion 3 and the second housing 2 are opened in the longitudinal direction. In this case, the Hall effect sensor 7 continues to detect the magnetic force of the magnet 6c.

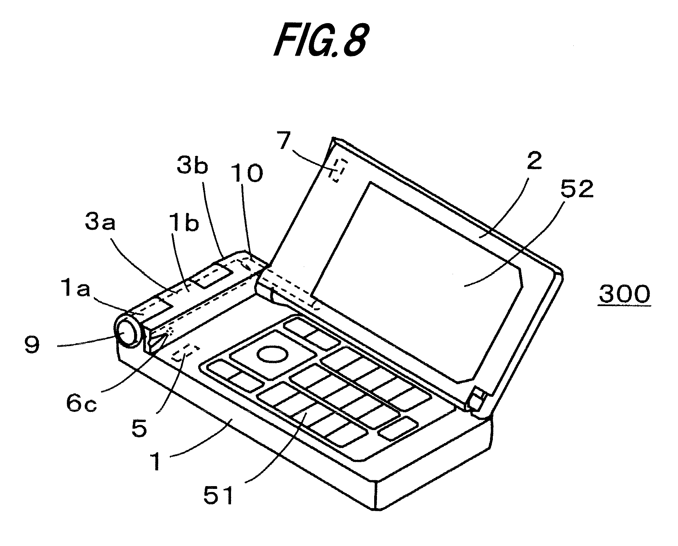

FIG. 8 is a perspective view illustrating a state in which the second housing 2 of the folding mobile phone 300 according to Embodiment 3 of the invention is opened in a lateral direction. When the second housing 2 is opened in the lateral direction with respect to the hinge portion 3 as illustrated in FIG. 8, the magnet 6c and the Hall effect sensor 7 are separated away from each other. Thus, the Hall effect sensor 7 detects that the second housing 2 is opened in the lateral direction. In this case, the Hall effect sensor 5 continues to detect the magnetic force of the magnet 6c.

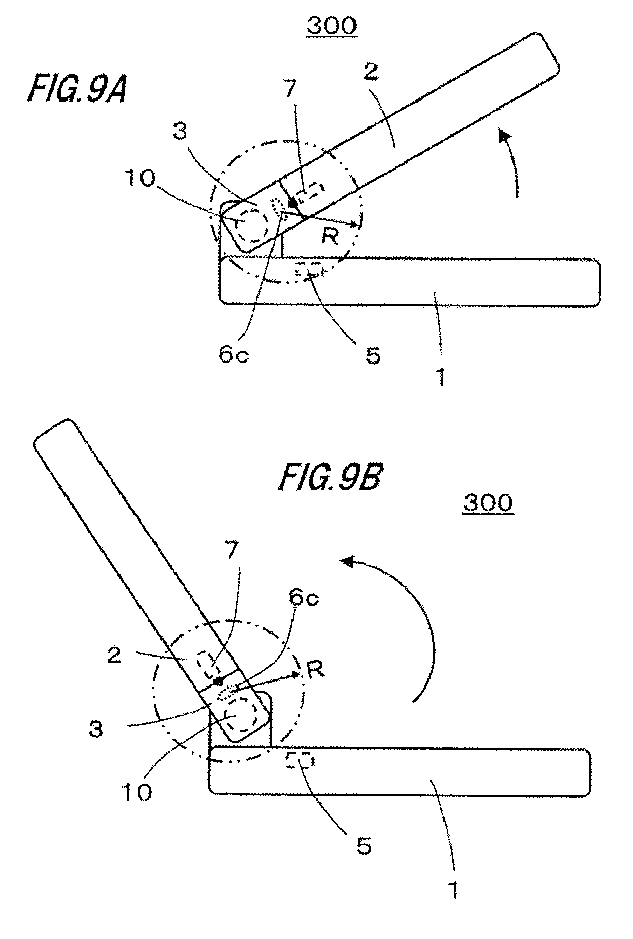

FIG. 9A is a left side view illustrating a state in which the second housing 2 of the folding mobile phone 300 according to the present embodiment of the invention is slightly opened in a longitudinal direction. FIG. 9B is a left side view illustrating a state in which the second housing 2 of the folding mobile phone 300 according to the present embodiment is largely opened in the longitudinal direction. When the second housing 2 is opened in the longitudinal direction, the magnet 6c and the Hall effect sensor 5 are separated away from each other, and the Hall effect sensor 5 detects that the housing 2 is opened in the longitudinal direction. However, it can be understood from FIGs. 9A and 9B that the Hall effect sensor 7 continues to detect the magnetic force of the magnet 6c.

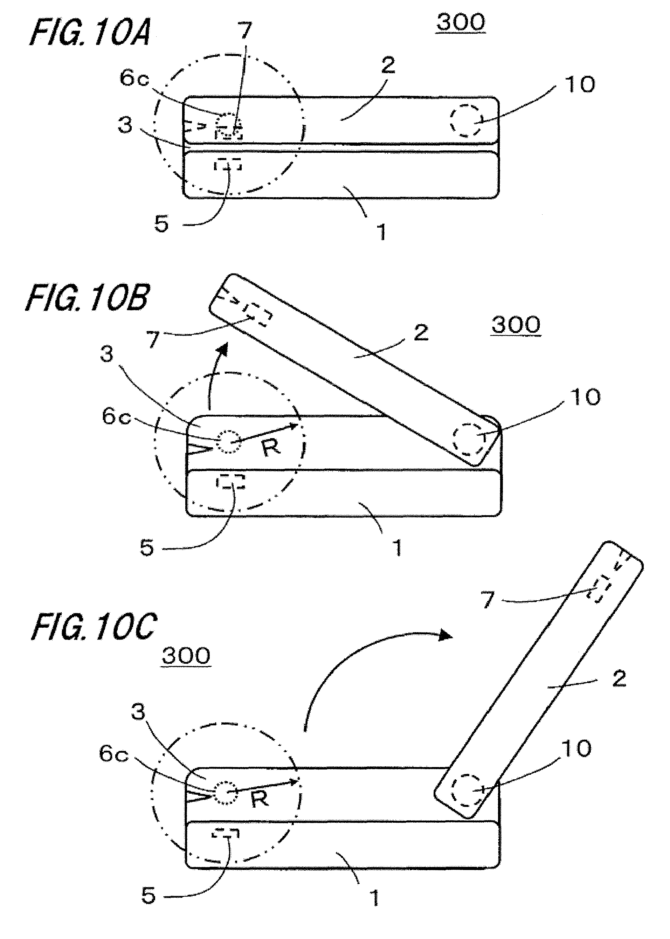

FIG. 10A is a front view illustrating a state in which the second housing 2 of the folding mobile phone 300 is closed. FIG. 10B is a front view illustrating a state in which the second housing 2 of the mobile phone 300 is slightly opened in a lateral direction. FIG. 10C is a front view illustrating a state in which the second housing 2 of the mobile phone 300 is largely opened in the lateral direction. When the second housing 2 is opened in the lateral direction, the magnet 6c and the Hall effect sensor 7 is separated away from the first housing 1. Thus, the Hall effect sensor 7 detects that the second housing 2 is opened in the lateral direction. In this case, it can be understood from FIGs. 10A to 10C that the Hall effect sensor 5 continues to detect the magnetic force of the magnet 6c.

As described above, the folding mobile phone 300 according to Embodiment 3 of the invention can perform longitudinal opening/closing detection and lateral opening/closing detection independent of each other even in a case where the magnet 6c is shared by the longitudinal opening/closing detection unit and the lateral opening/closing detection unit. As a result of sharing the magnet 6c, the weight and the space of one magnet can be saved. Consequently, the size and the weight of the folding mobile phone can be further reduced.

### (Embodiment 4)

Next, as Embodiment 4 of the invention, a folding mobile phone is described, in which the wireless telephone communication unit is further provided therein, and which has the function of automatically connecting the communication-line when the housing is unfolded at arrival of an incoming call and the function of automatically disconnecting the communication-line when the housing is folded after the communication-line is connected.

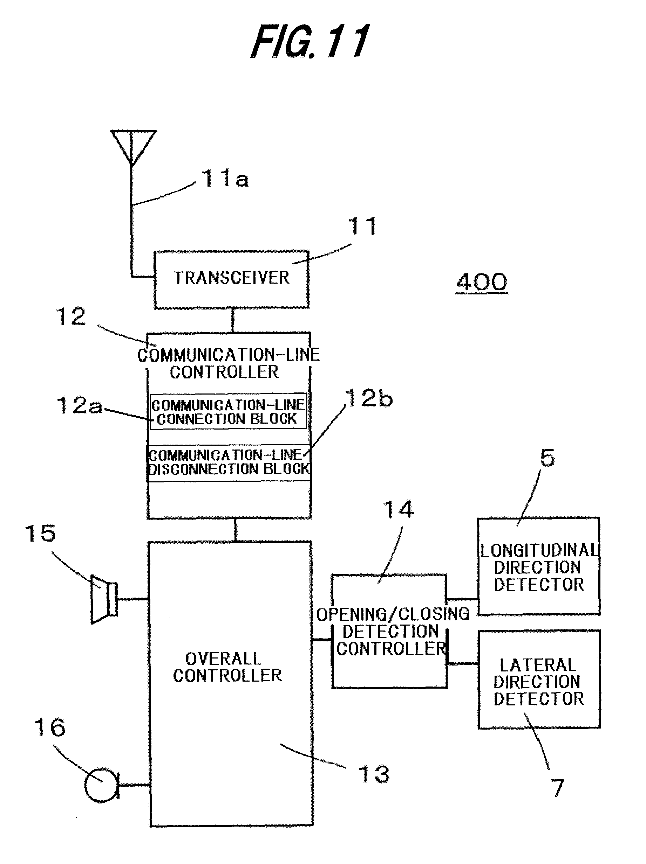

FIG. 11 is a block diagram illustrating main functional blocks of a folding mobile phone 400 according to Embodiment 4 of the invention. The folding mobile phone 400 has a transceiver 11 which transmits and receives radio waves via a mobile phone communication-line from an antenna 11a. The transceiver 11 is connected to a communication-line controller 12. The communication-line controller 12 connects and disconnects a mobile phone communication-line to and from the folding mobile phone 400 using a communication-line connection block 12a and a communication-line disconnection block 12b, respectively. The communication-line controller 12 is connected to an overall controller 13. The communication-line controller 12 is controlled by the overall controller 13 so as to function as a mobile phone.

An opening/closing detection controller 14 is connected to the overall controller 13. Further, a longitudinal opening/closing detector described as the Hall effect sensor 5 described with reference to FIGs. 1 and 2, and a lateral opening/closing detector described with reference thereto as the Hall effect sensor 7 are connected to the opening/closing detection controller 14.

The opening/closing detection controller 14 detects a folded state or an unfolded state of the folding mobile phone 400 using the longitudinal opening/closing detector and the lateral opening/closing detector. Further, a loudspeaker 15 and a microphone 16 are connected to the overall controller 13. Thus, a voice represented by a signal received from the transceiver 11 is output by the loudspeaker 15. In addition, a voice is input to the microphone 16, and a signal representing the input voice is transmitted from the transceiver 11 to another mobile phone via a base station.

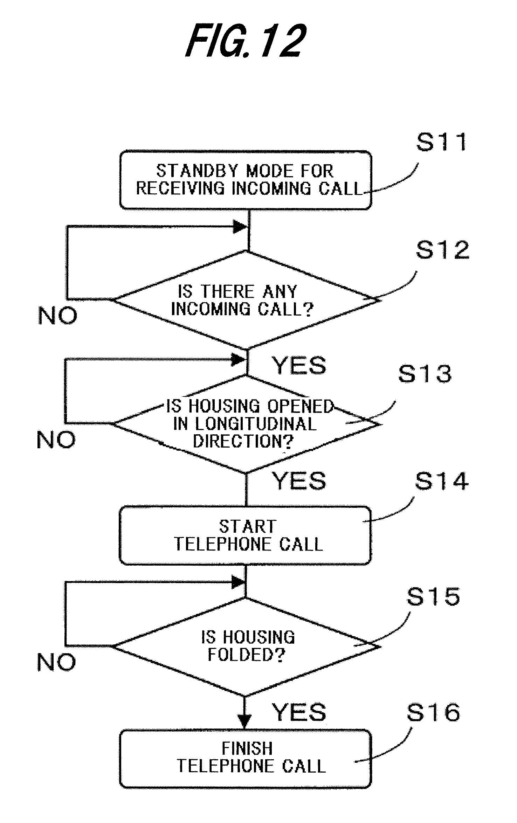

FIG. 12 is a flowchart illustrating an operation of the folding mobile phone 400 according to Embodiment 4 of the invention. The folding mobile phone 400 according to the invention is featured in that a communication-line is not connected thereto if the second housing is not opened in a longitudinal direction.

In step S11, the folding mobile phone 400 is in a standby mode for receiving an incoming call. At arrival of an incoming call (YES in step S12), it is detected whether the second housing 2 is opened in a longitudinal direction. If it is detected (YES in step S13) that the second housing 2 is opened in the longitudinal direction (YES in step S13), a communication-line is connected to the folding mobile phone 400. In step S14, the folding mobile phone 400 starts a telephone call. If the second housing 2 is closed after the telephone call (YES in step S15), the folding mobile phone 400 finishes the telephone call and disconnects the communication-line in step S16.

According to the invention, in the folding mobile phone configured to have two rotating shafts and to be opened and closed in a longitudinal direction and a lateral direction, when the folded second housing is unfolded, it is alternatively determined whether the second housing is opened in the longitudinal direction or in the lateral direction. Thus, when the second housing is opened in the longitudinal direction, a communication-line is connected to the folding mobile phone. And, when the second housing is opened in a lateral direction, it is not erroneously determined that the second housing is opened in the longitudinal direction. Consequently, the invention has an advantage in that when the second housing is opened in the lateral direction, no communication line is connected to the folding mobile phone.

The invention can be applied to a folding mobile terminal device configured to have two rotating shafts and to be opened and closed in a longitudinal direction and a lateral direction, such as not only a folding mobile phone, but a gaming machine to be used by switching the position of a display screen between a landscape-oriented position and a portrait-oriented position, and a PDA having the function of receiving television broadcasts.

## Claims

1. A folding mobile terminal device having a first housing and a second housing connected to each other via a hinge portion, comprising:
a first rotating shaft for opening and closing the hinge portion provided on the first housing in a longitudinal direction together with the second housing;
a second rotating shaft, provided on the hinge portion perpendicularly to the first rotating shaft, for opening and closing the second housing in a lateral direction;
a first magnet provided on the second housing in vicinity of a place at which the hinge portion is connected thereto;
a second magnet provided in the hinge portion;
a first magnetism detection unit provided in the first housing at a position facing the first magnet in a state in which the second housing is closed; and
a second magnetism detection unit provided in the second housing at a position facing the second magnet in a state in which the second housing is closed,
wherein the first magnetism detection unit detects based on a detection of magnetism generated by the first magnet that the second housing is opened or closed in the longitudinal direction; and
wherein the second magnetism detection unit detects based on a detection of magnetism generated by the second magnet that the second housing is opened or closed in the lateral direction.

2. The folding mobile terminal device according to claim 1,
wherein the first rotating shaft opens and closes the hinge portion, which is connected to the first housing by a plurality of bearing portions, in the longitudinal direction together with the second housing;
wherein the second rotating shaft is provided in one of the plurality of the bearing portions, which is provided at an end of the hinge portion, perpendicularly to the first rotating shaft; and
wherein the second magnet is provided at a side of the hinge portion, which is opposite to the second rotating shaft.

3. The folding mobile terminal device according to claim 1,
wherein the first housing is connected to the second housing via the hinge portion provided along one end side portion substantially parallel to a lateral direction of the first housing;
wherein the second rotating shaft is provided at an end of the hinge portion perpendicularly to the first rotating shaft; and
wherein the second magnet is provided at a side of the hinge portion, which is opposite to the second rotating shaft.

4. The folding mobile terminal device according to claim 1, further comprising:
an engaging pin provided on the first housing; and
an engaging portion provided on the second housing,
wherein the second rotating shaft is provided at an end of the hinge portion perpendicularly to the first rotating shaft;
wherein the second magnet is provided at a side of the hinge portion, which is opposite to the second rotating shaft; and
wherein the engaging pin and the engaging portion function as a support portion for supporting rotation of the second housing when the second housing is opened in the lateral direction.

5. The folding mobile terminal device according to claim 1, wherein a warning operation is performed when it is detected that the second housing is opened simultaneously in both of the longitudinal direction and the lateral direction.

6. The folding mobile terminal device according to claim 1, further comprising: a wireless telephone communication unit,
wherein when the first magnetism detection unit detects that the second housing is opened in the longitudinal direction at arrival of an incoming call, a communication-line is connected to the wireless telephone communication unit.

7. The folding mobile terminal device according to claim 6, wherein when the second magnetism detection unit detects that the second housing is opened in the lateral direction at arrival of the incoming call, the communication-line is not connected to the wireless telephone communication unit.
